# EUROPÄISCHE PATENTSCHRIFT

(11) **EP 1 886 875 B1**
(45) Veröffentlichungstag und Bekanntmachung des Hinweises auf die Patenterteilung: **19.10.2011**
(21) Anmeldenummer: 07015559.3
(22) Anmeldetag: 07.08.2007
(51) Int. Cl.: B60R 9/10, B60D 1/06

(54) **Lastenträger für ein Kraftfahrzeug**
Load carrier for a motor vehicle
Porte-charge pour un véhicule automobile

(30) Priorität: 07.08.2006 DE 102006036856
(43) Veröffentlichungstag der Anmeldung: 13.02.2008
(73) Patentinhaber: GM Global Technology Operations LLC, Detroit, MI 48265-3000 (US)
(72) Erfinder: Heim, Gunther, 68623 Lampertheim (DE); Oberfrank, Martin, 65468 Trebur (DE); Schmidlin, Frank, 65474 Bischofsheim (DE)
(74) Vertreter: Weber, Almut

(56) Entgegenhaltungen:
- EP-A- 1 757 488
- DE-A1- 19 612 959
- DE-U-202005 011 163
- DE-U1- 9 211 316
- US-A1- 2003 006 581
- US-B1- 6 176 406

## Beschreibung

Die Erfindung betrifft einen Lastenträger für ein Kraftfahrzeug.

Sperrige Güter wie beispielsweise Fahrräder, die nicht im Fahrzeuginneren untergebracht werden können, werden in der Regel außen befestigt. Hierfür werden Lastenträger eingesetzt, die entweder auf dem Fahrzeugdach oder am Fahrzeugheck montiert werden. Im Regelfall werden diese Lastenträger nur für den jeweiligen Bedarfsfall am Fahrzeug montiert und bei Nichtbenutzung anderweitig gelagert.

Aus der DE 102 52 132 A1 und auch der DE 10 2004 021 709 A1 ist jeweils ein Lastenträger für ein Kraftfahrzeug bekannt. Der Lastenträger zum Transport von Fahrrädern oder anderen Lasten ist dabei jeweils nach dem Prinzip einer Schublade konzipiert. In einer Parkposition befindet sich der Lastenträger von außen unsichtbar unter dem Fahrzeug. Zum Erreichen einer Betriebsstellung wird der Lastenträger heckseitig nach hinten ausgezogen. Der Lastenträger verbleibt damit dauerhaft am bzw. im Fahrzeug.

Aus der US 6,176,406 B1 ist eine Tragvorrichtung für einen heckseitigen Anbau an Kraftfahrzeugen bekannt, wobei zwei Schubschienen, welche an Fahrgestellteilen verschiebbar gelagert sind, mit einem Transportgestell eine Tragvorrichtung komplettieren. An den Fahrgestellteilen kann ein Querträger mit einer Deichselkupplung angeordnet sein, wobei der Querträger eine zusätzliche Stabilisierung der Tragvorrichtung bereitstellt.

Die DE 20 2005 011 163 U1 offenbart einen Heckträger, welcher im Heckbereich eines Fahrzeugs an zwei Befestigungspunkten befestigbar ist. Der Heckträger weist hierbei zwei stabförmig ausgebildete Adapter auf, welche als separate Einzelteile in je einen der Befestigungspunkte einbringbar sind. Der Heckträger weist hierbei ferner einen Tragrahmen mit zwei Aufnahmevorrichtungen mit einem Zentrierelement auf, welches ein jeweiliges Adapter-Endstück in der Aufnahmevorrichtung zentriert, so dass zwischen Aufnahmevorrichtung und Adapter nur noch Schwenkbewegungen möglich sind.

Aus der EP 1 757 488 A2 ist des Weiteren eine Trägeranordnung für ein Kraftfahrzeug bekannt, welche eine gabelartige Gestaltung mit mindestens zwei Haltearmen aufweist, die einen im montierten Zustand horizontalen Abstand zueinander haben und durch eine Querträgeranordnung miteinander verbunden sind. An der Querträgeranordnung der Trägeranordnung kann hierbei eine Kupplung für eine Anhängerzugvorrichtung fest angeordnet sein.

Die DE 92 11 316 U1 beschreibt ferner eine Vor-richtung zum lösbaren Befestigen eines Fahrradträgers am Heck eines Personenkraftwagens, deren Befestigung am Kraftfahrzeug ohne Anhängerkupplung auskommt.

Schließlich offenbart die US 2003/0006581 A1 eine schwenkbare Befestigung einer Anhängerkupplung an einem Kraftfahrzeug.

Es ist eine Aufgabe einer Ausführungsform der Erfindung, einen Lastenträger der eingangs genannten Art auf einfache Weise funktionell zu erweitern.

Die Lösung dieser Aufgabe erfolgt mit den Merkmalen der unabhängigen Ansprüche. Vorteilhafte Weiterbildungen werden durch die Merkmale der abhängigen Ansprüche wiedergegeben.

Ein erster Aspekt der Erfindung bezieht sich auf einen Lastenträger für ein Kraftfahrzeug. Bei einer ersten Ausführungsform umfasst der Lastenträger eine an der Karosserie befestigbare Halterung, relativ zu der ein Tragrahmen des Lastenträgers aus dem Fahrzeugheck ausziehbar ist. An der Halterung ist eine Kugelstange lösbar befestigt.

Der eingesetzte Lastenträger funktioniert nach dem Prinzip einer Schublade, bei der in einer Parkposition der Lastenträger von außen nicht sichtbar ist, weil er in die Karosserie des Fahrzeugs eingefahren ist. In einer Betriebsstellung ist ein Tragrahmen des Lastenträgers ausgefahren und steht zur Aufnahme von Lasten wie beispielsweise Fahrrädern oder anderen Lasten bereit. Der Lastenträger ist am Fahrzeugheck montiert und wird für den Einsatz entgegen der Fahrzeuglängsrichtung ausgefahren. Es können insofern die Lastenträger eingesetzt werden, die in der DE 102 52 132 A1 oder der DE 10 2004 021 709 A1 beschrieben sind.

Der Lastenträger wird mit einer Halterung an der Karosserie befestigt, beispielsweise an den Längsträgern der Bodenstruktur bzw. des Fahrzeugbodens. An der Halterung ist eine Kugelstange befestigt.

Die Ausführungsform kombiniert einen ausziehbaren Hecklastenträger mit einer Anhängerzugvorrichtung. Sie nutzt hierbei die Halterung doppelt, indem diese nicht nur der Befestigung der Kugelstange dient, sondern auch der Montage des Lastenträgers. Sie kommt daher mit weniger Bauteilen aus, als wenn ein Lastenträger und eine Anhängerzugvorrichtung einzeln am Fahrzeug montiert würden. Die Ausführungsform stellt damit eine preiswerte Lösung dar.

In einer Ausführungsform besitzt der Tragrahmen des Lastenträgers teleskopierbare Schienen, die durch den Stoßfänger des zugehörigen Kraftfahrzeugs geführt sind. Der Lastenträger kann damit optisch ansprechend schubladenförmig durch den Stoßfänger geführt werden, ohne dass äußere Anbauten, die das Fahrverhalten beeinträchtigen könnten, erforderlich sind.

Um in die Betriebsstellung des Lastenträgers zu gelangen, muss dessen Tragrahmen, zum Beispiel über seine teleskopierbaren Schienen, heckseitig ausgefahren oder ausgezogen werden. Hierbei kann, abhängig davon, welche Bodenfreiheit das zugehörige Fahrzeug besitzt, die Kugelstange im Weg sein.

Demgemäß wird in einer weiteren Ausführungsform vorgeschlagen, dass die Kugelstange entlang einer schräg gegenüber der Vertikalen ausgerichteten Achse schwenkbar ausgeführt ist. Damit der Lastenträger ausgezogen werden kann, wird zuvor die Kugelstange schräg nach unten in eine Ruhestellung verschwenkt. Die Kugelstange verbleibt dabei dauerhaft am Fahrzeug, sodass hierfür kein separates Verstauen der Kugelstange bei Benutzung des Lastenträgers erforderlich ist.

In einer weiteren Ausführungsform wird, als Alternative zur Ausführungsform des vorherigen Absatzes, vorgeschlagen, dass die Kugelstange lösbar mit der Halterung verbunden ist. In diesem Fall ist an die Halterung, beispielsweise einem Querträger, eine Kupplungsmechanik angeschraubt oder angeschweißt, und wird zum Abnehmen der Kugelstange deren Kugelstangen-verriegelung gelöst, um sie abzunehmen. Bei dieser mechanisch einfacheren Lösung wird die Kugelstange vor dem Ausziehen des Tragrahmens demontiert.

Bei einer Ausführungsform ist die Halterung ein Querträger, beispielsweise ein U-förmiger Querträger. Im letztgenannten Fall ist der für eine Anhängerzugvorrichtung oftmals eingesetzte Querträger insofern über seine U-Form geringfügig baulich angepasst, um als Befestigung für die Kugelstange zu dienen. Zwischen der Bodenstruktur und dem Querträger kann dann der Lastenträger auf einfache Weise befestigt werden.

Eine Ausführungsform sieht ferner vor, dass die Halterung am Längsträger der Bodenstruktur befestigt ist. Dies bietet die Möglichkeit, die teleskopierbaren Schienen Platz sparend in die Längsträger einfahren zu lassen.

Ein weiterer Aspekt der Erfindung bezieht sich auf ein Kraftfahrzeug, beispielsweise einem Pkw. Das Kraftfahrzeug besitzt hierbei einen Lastenträger, wie oben beschrieben.

Weitere Merkmale und Vorteile der beanspruchten Erfindung werden aus der folgenden detaillierten Beschreibung mit Bezug auf die beigefügten Zeichnungen erkennbar die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Figur 1: ein Kraftfahrzeug mit einem eingefahrenen Lastenträger,
- Figur 2: ein Kraftfahrzeug mit einem ausgefahrenen Lastenträger,
- Figur 3: den Lastenträger in seiner Betriebsstellung,
- Figur 4: den Lastenträger in seiner Ruheposition.

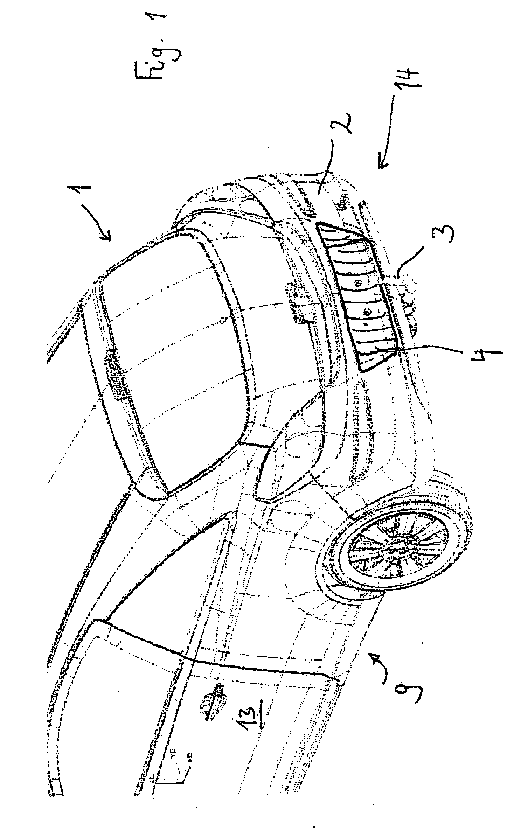

Figur 1 zeigt den Heckbereich 13 eines Kraftfahrzeugs 1 mit einem Stoßfänger 2, 2a und einer Kugelstange 3. Hinter dem schraffierten Bereich 4, wo das Nummernschild angeordnet wird, befindet sich unsichtbar ein Lastenträger 5.

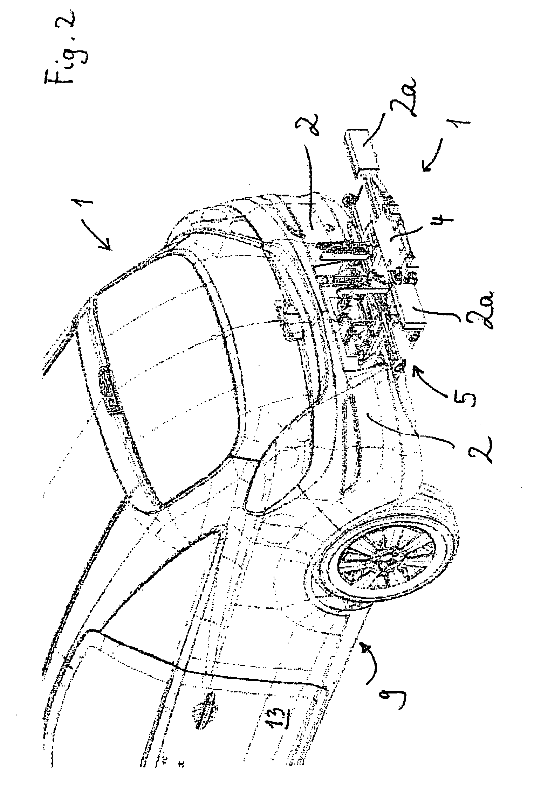

Figur 2 zeigt das Fahrzeug der Figur 1, bei dem der Lastenträger 5 ausgefahren ist. Die Kugelstange 3 ist hierbei demontiert. Der Lastenträger 5 ist schubladenförmig durch den Stoßfänger 2, 2a des Kraftfahrzeugs 1 geführt, wobei der Bereich 4 für das Nummernschild ebenfalls mit nach hinten verschoben ist und daher auch bei ausgezogenem Lastenträger sichtbar bleibt.

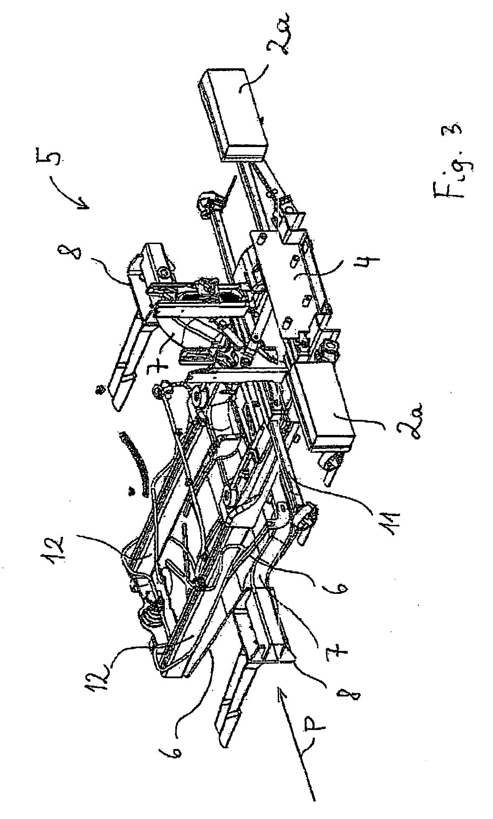

Figur 3 zeigt den Lastenträger 5 korrespondierend zu Figur 1 in der zur Fahrzeugrückseite hin ausgefahrenen Position bzw. der Betriebsstellung. Der Lastenträger 5 ist über Streben 6 sowie auf seiner Unterseite über in der Figur 3 nicht sichtbare Schraubverbindungen mit der Karosserie 13 verbunden, und zwar mit deren U-förmigem Querträger 7. Der Pfeil P gibt hierzu die Fahrzeugquerrichtung an. Der Querträger 7 ist seinerseits über Ansatzstücke 8 mit den zum Fahrzeugboden 9 gehörenden Längsträgern 10 verbunden.

Der Längsträger 5 umfasst einen Tragrahmen 11, der über teleskopierbare Schienen 12 senkrecht zur Pfeilrichtung P verschoben werden kann. Da der Stoßfänger 2,2a mehrteilig ausgestaltet ist, ergibt sich bei einem in den Stoßfänger 2, 2a eingefahrenen Lastenträger 5 abgesehen von zusätzlichen Nullfugen ein unverändertes Erscheinungsbild des Heckbereichs 14 gegenüber einem Kraftfahrzeug 1 ohne Lastenträger 5. Diese Gestaltung lässt daher das optische Erscheinungsbild des Fahrzeugs 1 weitestgehend unberührt.

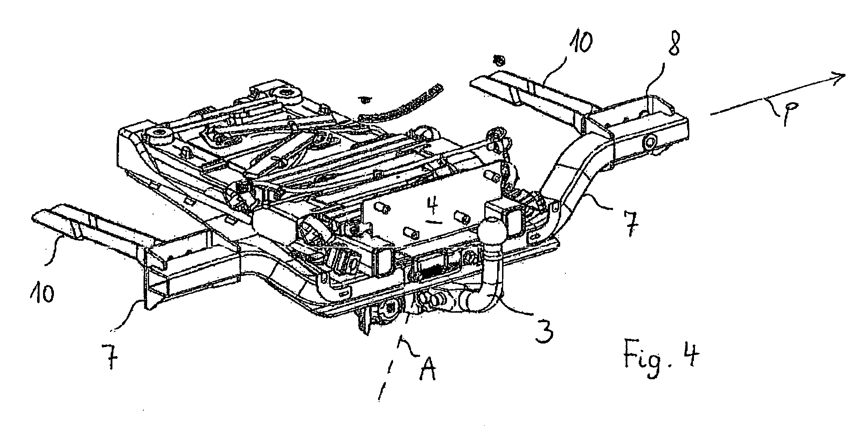

Figur 4 zeigt den Lastenträger 5 der Figur 3 in seiner Parkposition. In der Parkposition befindet sich der Bereich 4 für das Nummernschild in etwa über dem Querträger 7 und kann die Kugelstange 3 lösbar am Querträger 7 befestigt, nämlich durch Verschraubung. Alternativ kann die Kugelstange 3 über eine schräg zur Vertikalen ausgerichtete Achse A schwenkbar ausgeführt sein, sodass sie bei Nichtbenutzung unter dem Stoßfänger 2, 2a angeordnet ist.

### Bezugszeichenliste

- 01: Kraftfahrzeug
- 02: Stoßfänger
- 02a: Stoßfänger
- 03: Kugelstange
- 04: Bereich
- 05: Lastenträger
- 06: Strebe
- 07: Querträger
- 08: Ansatzstück
- 09: Fahrzeugboden
- 10: Längsträger
- 11: Tragrahmen
- 12: Schiene
- 13: Karosserie
- 14: Heckbereich

- P: Pfeil
- A: Achse

## Patentansprüche

1. Lastenträger (5) für ein Kraftfahrzeug (1), umfassend eine an der Karosserie (13) befestigbare Halterung (7), relativ zu der ein Tragrahmen (11) des Lastenträgers aus dem Fahrzeugheck (14) ausziehbar ist, sowie eine an der Halterung (7) befestigte Kugelstange (3) einer Anhängerzugvorrichtung, **dadurch gekennzeichnet, dass** die Kugelstange (3) lösbar mit der Halterung (7) verbunden ist.

2. Lastenträger nach Anspruch 1, bei dem der Tragrahmen an teleskopierbaren Schienen (12) durch den Stoßfänger (2,2a) eines Kraftfahrzeugs durchführbar ist.

3. Lastenträger nach einem der vorherigen Ansprüche, bei dem die Kugelstange entlang einer schräg gegenüber der Vertikalen ausgerichteten Achse schwenkbar ist.

4. Lastenträger nach einem der vorherigen Ansprüche, bei dem die Halterung ein Querträger (7) ist.

5. Lastenträger nach einem der vorherigen Ansprüche, bei dem die Halterung am Längsträger (10) des Fahrzeugbodens (9) befestigt ist.

6. Kraftfahrzeug (1) mit einem Lastenträger (5) nach einem der vorherigen Ansprüche.

## Claims

1. A load-carrying device (5) for a motor vehicle (1), comprising a support (7) which can be fastened to the car body (13) and relative to which a support frame (11) of the load-carrying device can be extended from the rear (14) of the vehicle, and a ball bar (3) of a trailer pulling apparatus which is fastened to the support (7), **characterized in that** the ball bar (3) is detachably connected with the support (7).

2. A load-carrying device according to claim 1, wherein the support frame can be guided on telescopic rails (12) through the bumpers (2, 2a) of a motor vehicle.

3. A load-carrying device according to one of the preceding claims, wherein the ball bar is pivotable along an axis aligned obliquely in relation to the perpendicular.

4. A load-carrying device according to one of the preceding claims, wherein the support is a transverse member (7).

5. A load-carrying device according to one of the preceding claims, wherein the support is fastened to the side member (10) of the vehicle floor (9).

6. A motor vehicle (1), comprising a load-carrying device (5) according to one of the preceding claims.

## Revendications

1. Porte-charges (5) pour un véhicule à moteur (1), comprenant une monture (7) pouvant être fixée à la carrosserie (13), par rapport à laquelle un cadre portant (11) du porte-charges peut être déployé à partir de l'arrière (14) du véhicule, ainsi qu'une barre avec boule (3) d'un dispositif de traction de remorque fixée à la monture (7), **caractérisé en ce que** la barre avec boule (3) est reliée de façon amovible à la monture (7).

2. Porte-charges selon la revendication 1, dans lequel le cadre portant peut être passé à travers le pare-chocs (2, 2a) d'un véhicule à moteur sur des rails télescopiques (12).

3. Porte-charges selon l'une des revendications précédentes, dans lequel la barre avec boule peut pivoter autour d'un axe orienté à l'oblique par rapport à la verticale.

4. Porte-charges selon l'une des revendications précédentes, dans lequel la monture est une traverse de support (7).

5. Porte-charges selon l'une des revendications précédentes, dans lequel la monture est fixée sur le longeron (10) du plancher (9) du véhicule.

6. Véhicule à moteur (1) avec un porte-charges (5) selon l'une des revendications précédentes.
